# EUROPÄISCHE PATENTANMELDUNG

(11) **EP 4 717 524 A1**
(43) Veröffentlichungstag der Anmeldung: **01.04.2026**
(21) Anmeldenummer: 24203449.4
(22) Anmeldetag: 30.09.2024
(51) Int. Cl.: B60R 3/00

(54) **ABSTURZSICHERUNG FÜR EINE BAUMASCHINE**

(71) Anmelder: Joseph Vögele AG, 67067 Ludwigshafen (DE)
(72) Erfinder: MEIER, Nils, 68163 Mannheim (DE)
(74) Vertreter: Grünecker Patent- und Rechtsanwälte PartG mbB

(57) **Zusammenfassung**

Es wird eine Absturzsicherung (1) für eine Baumaschine bereitgestellt, umfassend: einen Handlauf (2); eine Befestigungsanordnung (4); eine Vielzahl von Pfosten (5), die in Abständen zueinander entlang einer X-Achse eines kartesischen XYZ-Koordinatensystems der Absturzsicherung (1) angeordnet und ausgebildet sind, um den Handlauf (2) und die Befestigungsanordnung (4), die parallel und beabstandet zueinander entlang einer Z-Achse des kartesischen XYZ-Koordinatensystems angeordnet sind, abzustützen; und einen Verbindungsmechanismus (6) zum Verbinden der Vielzahl von Pfosten (5) mit dem Handlauf (2) und der Befestigungsanordnung (4) derart, dass die Absturzsicherung (1) in einer durch die X-Achse und die Z-Achse gebildete Ebene (XZ) zwischen einer Transportstellung (A) und einer Arbeitsstellung (B) bewegbar ist.

## Beschreibung

### Technisches Gebiet

Die vorliegende Erfindung betrifft eine Absturzsicherung.

### Stand der Technik

Baumaschinen, insbesondere Straßenbaumaschinen wie ein Straßenfertiger, weisen in der Regel einen Bedienstand auf, auf dem ein Bedienpult zur Steuerung der Baumaschine, mindestens ein Fahrersitz und weitere Steuergeräte angeordnet sind, und auf dem sich während des Betriebs ein oder mehrere Operateure bzw. Fahrer aufhalten. Zur besseren Übersicht über die Baumaschine und zur Überwachung, Wartung und Bedienung der Baumaschine sind oftmals an einer oder beiden Seiten der Baumaschine Plattformen bzw. Laufstege vorgesehen, die die Bedienung der Baumaschine erleichtern.

Diese Laufstege sind entweder ortsfest auf Höhe des Bedienstandes vorgesehen oder verfahrbar ausgebildet, um die Höhe des Laufsteges entsprechend der Position anzupassen, an der Arbeiten bzw. Kontrollen durchgeführt werden sollen.

Da der Bedienstand sich zumeist in erhöhter Position auf der Baumaschine befindet bzw. die Arbeiten an erhöhten Positionen durchgeführt werden müssen, ist an den Seiten des Laufsteges üblicherweise ein Geländer als Absturzsicherung angebracht. Diese begrenzen zugleich den Zugang zum Laufsteg, welcher meist nur über einen begrenzten Bereich an einer Seite der Baumaschine durch eine Aussparung im Geländer ermöglicht wird.

### Problemstellung

Herkömmliche Geländer als Absturzsicherung sind z.B. fest an der Baumaschine montiert, oder sie sind als Ganzes montierbar/demontierbar. Alternativ bestehen sie z.B. aus mehreren Teilen und müssen händisch entriegelt, manuell von der Transportstellung in die Arbeitsstellung gebracht und wieder verriegelt werden. Dabei befindet sich der Bediener z.B. auf dem Laufsteg, der sich zum einen, je nach Ausführung der Baumaschine, in erhöhter Lage befinden kann, und zum anderen nur einen begrenzten Raum zum Auf- und Abbau des Geländers vorsieht. Aufgrund der sperrigen Einzelteile und des eingeschränkten Bewegungsraums besteht das Problem, dass der Aufbau sehr zeitintensiv ist und ein erhöhtes Unfallrisiko beim Auf- bzw. Abbau mit sich bringt.

Somit ist es eine Aufgabe der vorliegenden Erfindung, eine verbesserte Absturzsicherung für eine Baumaschine bereitzustellen, deren Handhabung vereinfacht und deren Rüstzeit verkürzt werden kann.

Diese Aufgabe wird durch eine Absturzsicherung mit den Merkmalen des Anspruchs 1 gelöst. Vorteilhafte Weiterbildungen der Erfindung sind in den Unteransprüchen angegeben.

### Problemlösung

Die erfindungsgemäße Absturzsicherung für eine Baumaschine umfasst: einen Handlauf; eine Befestigungsanordnung; eine Vielzahl von Pfosten, die in Abständen zueinander entlang einer X-Achse eines kartesischen XYZ-Koordinatensystems der Absturzsicherung angeordnet und ausgebildet sind, um den Handlauf und die Befestigungsanordnung, die parallel und beabstandet zueinander entlang einer Z-Achse des kartesischen XYZ-Koordinatensystems angeordnet sind, abzustützen; und einen Verbindungsmechanismus zum Verbinden der Vielzahl von Pfosten mit dem Handlauf und der Befestigungsanordnung derart, dass die Absturzsicherung in einer durch die X-Achse und die Z-Achse gebildete Ebene zwischen einer Transportstellung und einer Arbeitsstellung bewegbar ist.

Die zuvor beschriebene Absturzsicherung gewährleistet einen schnellen Rüstvorgang und einen sicheren Auf- und Abbau der Absturzsicherung.

Die Bewegung zwischen der Transportstellung und der Arbeitsstellung kann z.B. eine Parallelogrammführung oder eine Vertikalführung sein.

Der Handlauf kann ein offenes oder geschlossenes Profil mit unterschiedlichen Geometrien wie z.B. kreisförmig, quaderförmig oder elliptisch aufweisen. An jeweiligen Endabschnitten des Handlaufs kann eine Endkappe aufgesetzt sein. Die Endabschnitte können gebogen ausgebildet sein. Einer der Endabschnitte weist vorzugsweise eine Länge auf, die so bemessen ist, dass sie sich über eine Breite des Laufstegs erstreckt. An diesem Endabschnitt kann ein Seitenschutz angebracht werden, um den Bediener vor einem Abstürzen oder Hindurchstürzen zu schützen. Der Seitenschutz kann U-förmig ausgebildet sein und eine kreisförmige, quaderförmige oder elliptische Rohrform aufweisen. Am Handlauf können mehrere Halteelemente ausgebildet sein. Die Haltelemente sind vorzugsweise stabförmig ausgebildet und erstrecken sich vom Handlauf in der Z-Achsenrichtung nach unten. In der Arbeitsstellung dienen die Halteelemente vorzugsweise als Stabilisierungselemente. Während des Auf- und Zusammenklappens der Absturzsicherung können die Halteelemente als Führungshilfen dienen.

Die Absturzsicherung kann eine Knieleiste aufweisen. Die Knieleiste kann parallel zu und beabstandet von dem Handlauf in der Höhenrichtung (Z-Achsenrichtung) angeordnet sein. Sie kann eine Rohrform wie der Handlauf aufweisen und befindet sich üblicherweise mittig zwischen dem Handlauf und der Befestigungsanordnung. Der Abstand zwischen der Knieleiste und dem Handlauf sollte 50 cm nicht überschreiten. Es können auch mehr als eine Knieleiste vorgesehen sein.

Die Befestigungsanordnung kann eine Bodenplatte, eine vordere Seitenwand, eine hintere Seitenwand und zwei laterale Seitenwände, die die vordere Seitenwand und die hintere Seitenwand miteinander verbinden, umfassen, um eine nach oben offene Kastenform zu bilden. Die Vielzahl von Pfosten kann relativ zur Kastenform bewegbar angeordnet sein. Die Befestigungsanordnung kann in einer vorteilhaften Ausgestaltung ohne hintere Seitenwand ausgebildet sein. Die Befestigungsanordnung kann relativ bewegbar zu der Vielzahl von Pfosten angeordnet sein. Die Befestigungsanordnung kann eine Fußleiste der Absturzsicherung bzw. des Geländers sein.

Die Vielzahl von Pfosten sind entlang der Längsrichtung der Absturzsicherung in regelmäßigen Abständen angeordnet, um den Handlauf und die Befestigungsanordnung, die parallel und beabstandet zueinander in der Höhenrichtung angeordnet sind, zu halten. Die Vielzahl von Pfosten kann jeweils an der Innenfläche der vorderen Seitenwand und der hinteren Seitenwand der Befestigungsanordnung befestigt sein. Die Pfosten können eine Vielzahl von Bohrungen aufweisen, um den Handlauf und die Befestigungsanordnung, ggf. auch die Knieleiste, in unterschiedlichen Höhen entsprechend den Spezifikationen zu montieren.

In einer zweckmäßigen Ausführungsform umfasst die Absturzsicherung einen Handgriff zur manuellen Bewegung der Absturzsicherung zwischen der Transportstellung und der Arbeitsstellung. Durch die Ausbildung eines Handgriffs kann die Bewegung der Absturzsicherung zwischen der Transportstellung und der Arbeitsstellung effektiv und sicher erfolgen.

In einer zweckmäßigen Ausführungsform ist die Arbeitsstellung durch ein Arretierungselement einstellbar. Auf diese Weise kann verhindert werden, dass die Absturzsicherung durch einen Stoß oder Anlehnen des Bedieners zusammenklappt und möglicherweise zu Verletzungen führt. Das Arretierungselement kann so ausgebildet sein, dass es lediglich eine festgelegte Arbeitsstellung zulässt. Alternativ kann das Arretierungselement so ausgebildet sein, dass individuell einstellbare Arbeitsstellungen möglich sind. Insbesondere kann die Absturzsicherung auf unterschiedliche Höhen eingestellt werden.

In einer besonders vorteilhaften Variante ist das Arretierungselement an der Befestigungsanordnung ausgebildet. Insbesondere ist das Arretierungselement auf einer Seite, die der Seite, an der der Seitenschutz vorgesehen ist, gegenüberliegt, ausgebildet. Das Arretierungselement dient der Arretierung der Absturzsicherung in der Arbeitsstellung. In einer weiteren Variante kann das Arretierungselement auf derselben Seite wie der Seitenschutz vorgesehen sein.

Vorteilhafterweise weist die Absturzsicherung ferner einen Linearaktuator zur Unterstützung der Bewegung zwischen der Transportstellung und der Arbeitsstellung auf. Der Linearaktuator kann eine Gasdruckfeder sein. Da die an Baumaschinen verwendeten Absturzsicherungen bzw. Geländer typischerweise aus Metall hergestellt sind und mitunter sehr groß ausgebildet sein können, ist es vorteilhaft, das Aufstellen bzw. Zusammenklappen der Absturzsicherung mechanisch zu unterstützen, um die Verletzungsgefahr noch weiter zu reduzieren. Der Linearaktuator ist an der Befestigungsanordnung befestigbar. Der Linearaktuator kann in einer Aussparung, die in der Befestigungsanordnung ausgebildet ist, untergebracht sein. Auf diese Weise wird verhindert, dass der Bediener am Linearaktuator hängenbleibt, wodurch eine Verletzungsgefahr noch weiter zu reduziert wird. Die Aussparung kann in der vorderen Seitenwandfläche, der hinteren Seitenwandfläche oder dazwischen ausgebildet sein.

Bei Linearaktuatoren oder Elektrozylindern dient ein Elektromotor als Antrieb. Oft handelt es sich dabei um einen Servomotor. Der Motor kann mit einem Getriebe gekoppelt sein, meist erzeugt der Motor die Bewegung jedoch direkt über eine Gewindespindel. Über einen Links-/Rechtslauf kann die Spindel ein- und ausgefahren werden. Eine Begrenzung der Bewegung kann durch die Anwendung selbst oder auch durch einen Endschalter realisiert werden. Der Linearaktuator erzeugt eine Schub- und Druckkraft, um die Absturzsicherung zwischen der Transportstellung A und der Arbeitsstellung B zu bewegen. Das Erreichen der Transportstellung A und/oder der Arbeitsstellung B der Absturzsicherung kann durch Ausgabe eines visuellen oder akustischen Signals angezeigt werden.

Linearaktuatoren haben den Vorteil, dass sie verschleißfrei sind und kaum einer Wartung bedürfen. Ferner sind sie leicht zu integrieren ohne Einfluss auf die Baugröße, weisen eine hohe Wiederholgenauigkeit und Präzision auf, und es können je nach Spezifikation der Absturzsicherung hohe Kräfte übertragen werden. Ferner sind die Linearaktuatoren selbsthemmend und es ist keine anderweitige Verriegelung notwendig.

In einer zweckmäßigen Ausführungsform ist die Absturzsicherung durch ihr Eigengewicht in der Transportstellung gelagert. Zusätzlich kann die Absturzsicherung auch noch durch eine Verriegelung in der Transportstellung arretiert werden. Dadurch sind keine zusätzlichen Arretierungselemente erforderlich, wodurch ein Kostenanstieg und eine Zunahme der Komponenten verhindert werden kann. Ferner verbessert sich dadurch der Rüstvorgang. Bei der kastenförmigen Ausgestaltung der Befestigungsanordnung kann die Vielzahl der Pfosten derart in der kastenförmigen Befestigungsanordnung bewegbar ausgebildet sind, dass die Transportstellung durch eine Höhe der lateralen Seitenwand der Befestigungsanordnung begrenzt ist.

Vorteilhafterweise ist der Verbindungsmechanismus ein Drehgelenk an Anbindungspunkten der Vielzahl von Pfosten, sodass die Bewegung zwischen der Transportstellung und der Arbeitsstellung eine Parallelogrammführung ist. Durch die Parallelogrammführung ergibt sich ein offener Freiheitsgrad, der für die Verstellung genutzt wird. Insbesondere ist dadurch eine Bewegung in der XZ-Ebene um die Drehgelenke möglich. Das Drehgelenk kann durch eine Bohrung, die in den Pfosten ausgebildet ist, und einen in die Bohrung eingesetzten Bolzen gebildet werden. Als Anbindungspunkte werden die Befestigungspunkte der Pfosten an den Handlauf und die Befestigungsanordnung, ggf. an die Knieleiste, bezeichnet. Es kann eine Vielzahl von Bohrungen entlang der Längsrichtung bzw. der Erstreckungsrichtung der Pfosten ausgebildet sein. Als Drehgelenk können auch Schrauben verwendet werden. In einer zweckmäßigen Ausführungsform ist der Handgriff an einem der Vielzahl von Pfosten ausgebildet ist. Der Handgriff kann auf einer Seite, die der Seite gegenüberliegt, an der der Seitenschutz ausgebildet ist, angebracht sein. Der Handgriff kann seitlich an dem einen Pfosten angebracht werden. Der Bediener greift den Handgriff und bewegt die Absturzsicherung durch Ziehen in Richtung Arbeitsstellung und durch Drücken in Richtung Transportstellung. Durch die seitliche Anbringung des Handgriffs kann die Absturzsicherung schnell und einfach aufgestellt und zusammengeklappt werden.

Gemäß einer Ausgestaltung umfasst das Arretierungselement ein Rastelement, das in ein an einem der Vielzahl von Pfosten ausgebildetes Gegenstück, eingreift. Dies gewährleitstet eine sichere Arretierung der Absturzsicherung in der Arbeitsstellung. Das Rastelement kann ein Rastbolzen sein, der an einem der Vielzahl von Pfosten angebracht ist, und das Gegenstück kann ein Einrastelement in der Form einer Aussparung sein, die in dem einen Pfosten ausgebildet ist. Die Aussparung kann in einem Führungselement ausgebildet sein. Das Führungselement kann eine konische Führungsfläche aufweisen, die ausgebildet ist, um den Rastbolzen zu der und in die Aussparung zu führen. In dem Rastbolzen kann eine Rückstellfeder ausgebildet sein, deren Rückstellkraft das Ein- und Ausrasten ermöglicht. Das Ein- und Ausrasten des Rastbolzens kann durch die manuelle Bewegung des Rastbolzens durch den Bediener erfolgen.

Das Rastelement kann eine Rastnase sein, die an der Befestigungsanordnung angebracht ist, und das Gegenstück kann ein Einrastelement in der Form einer Aussparung sein, die in dem einen Pfosten ausgebildet ist. Alternativ kann das Einrastelement ein Zwischenstück in der Form eines stabförmigen Elements sein. In diesem Fall ist der Pfosten als Doppelpfosten ausgebildet, wobei das stabförmige Element zwischen den beiden Pfosten angeordnet ist. Das Arretierungselement kann als Schnappverschluss ausgebildet sein, bei dem das Rastelement derart beweglich ausgebildet ist, dass es bei der Bewegung der Absturzsicherung in die Arbeitsstellung durch den Druck, der durch den mit der Aussparung versehenen Pfosten oder das Zwischenstück des Doppelpfostens ausgeübt wird, nach oben bewegt wird und dann in die Aussparung oder das Zwischenstück einrastet. Das Arretierungselement kann auf der Seite, auf der das Rastelement ausgebildet ist eine Rückstellfeder aufweisen, deren Rückstellkraft das Ein- und Ausrasten ermöglicht. Das Ein- und Ausrasten des Rastelements kann durch die manuelle Bewegung der Absturzsicherung durch den Bediener erfolgen. Alternativ kann ein Verriegelungs-/Entriegelungsmechanismus an dem Arretierungselement ausgebildet sein, um die Arretierung in der Arbeitsstellung und das Lösen aus dieser zu bewerkstelligen. Alternativ kann anstelle eines Doppelpfostens auch ein einzelner Pfosten in der Form eines C gekanteten Blechs verwendet werden. In diesem Fall ist in der Seitenfläche, die der Rastnase zugewandt ist, eine Öffnung ausgebildet, durch die die Rastnase in das Zwischenstück eingreift. Alternativ kann die Öffnung auch die Aussparung bilden, in die die Rastnase eingreift.

Gemäß einer Ausführungsform ist die Absturzsicherung durch das Eigengewicht der Befestigungsanordnung in der Transportstellung gelagert. Auch in diesem Fall sind keine zusätzlichen Arretierungselemente erforderlich, wodurch ein Kostenanstieg und eine Zunahme der Komponenten verhindert werden kann. Ferner verbessert sich dadurch der Rüstvorgang.

Gemäß einer weiteren Ausführungsform ist der Verbindungsmechanismus eine Führung, die so an der Befestigungsanordnung ausgebildet ist, dass die Bewegung zwischen der Transportstellung und der Arbeitsstellung eine Vertikalführung ist. Die Führung kann als rohrförmiges Element mit einem wahlweise runden oder quaderförmigen Querschnitt ausgebildet sein, durch das/die der Pfosten geführt wird. Es können eine oder mehrere, vorzugsweise zwei, rohrförmige Elemente verwendet werden. Alternativ kann die Führung als Manschetten ausgebildet sein, die um den Pfosten angeordnet und befestigt werden. Auch in diesem Fall können eine oder mehrere, vorzugsweise zwei, Manschetten verwendet werden.

Auch in dieser Ausführungsform kann der Handlauf ein offenes oder geschlossenes Profil mit unterschiedlichen Geometrien, wie z.B. kreisförmig, quaderförmig oder elliptisch, aufweisen. Mithilfe des Handlaufs kann die Absturzsicherung bzw. das Geländer durch Hochziehen und automatisches Verriegeln schnell und einfach in die Arbeitsstellung gebracht werden. Durch Ziehen an dem Handgriff kann gemäß dieser Ausführungsform ebenso schnell und einfach in die Transportstellung gebracht werden.

Vorteilhafterweise ist der Handgriff an der Befestigungsanordnung ausgebildet. Durch die Anbringung des Handgriffs an der Befestigungsanordnung kann das Ziehen der Absturzsicherung bzw. des Geländers in die Transportstellung entweder mit der Hand oder mit dem Fuß des Bedieners erfolgen. Vorzugsweise wird der Handgriff an einer Oberseite der Befestigungsanordnung befestigt, insbesondere an der Oberseite der hinteren Seitenwand. Der Handgriff kann in der Mitte der Befestigungsanordnung vorgesehen sein. Ferner kann die Länge des Handgriffs so bemessen sein, dass er sich mindestens über ein Drittel der Länge der Befestigungsanordnung erstreckt. Die Länge des Handgriffs kann sich über die halbe oder die ganze Länge der Oberseite der Befestigungsanordnung erstrecken. Alternativ kann der Handgriff auch an der vorderen Seitenfläche der Befestigungsanordnung ausgebildet sein. Auch in diesem Fall kann sich die Länge des Handgriffs über ein Drittel oder die Hälfte der Länge oder über die ganze Länge der Befestigungsanordnung erstrecken. In einer weiteren vorteilhaften Variante können zwei Handgriffe an der Oberseite oder der vorderen Seitenfläche der Befestigungsanordnung ausgebildet sein. Die Anzahl und/oder Länge des Handgriffs ist entsprechend der Abmessung und des Gewichts der Absturzsicherung auswählbar.

Gemäß einer vorteilhaften Ausbildung kann der Handgriff eine trapezförmige Stange mit z.B. rundem oder ovalen Querschnitt sein. Endabschnitte der trapezförmigen Stange sind z.B. so nach außen gebogen, dass sie an einer Oberseite der Befestigungsanordnung befestigbar sind. Der Handgriff kann an der vorderen oder hinteren Seitenwand angebracht sein. An jedem Endabschnitt ist ein plattenförmiges Befestigungsstück vorgesehen, das mit dem Handgriff verschweißt oder mittels Reibschluss verbunden werden kann. Alternativ können die Endabschnitte der trapezförmigen Stange flach bzw. plattenförmig ausgebildet sein. Das plattenförmige Befestigungsstück weist z.B. ein oder eine Vielzahl von Durchgangslöcher auf. Eine Befestigungsplatte kann an der Innenfläche der vorderen oder hinteren Seitenwand befestigt sein. Die Befestigungsplatte ist z.B. L-förmig ausgebildet und wird so an der vorderen oder hinteren Seitenwand befestigt, dass sich der kurze Schenkel der L-Form auf Höhe der Oberseite befindet und nach innen ragt, um als Auflagefläche zu dienen. Der lange Schenkel der L-Form kann mittels Schrauben oder Bolzen an der Innenfläche der vorderen oder hinteren Seitenwand befestigt werden. Der kurze Schenkel der L-Form weist z. B. Durchgangslöcher auf, die der Anzahl der Durchgangslöcher im plattenförmigen Befestigungsstück entsprechen. Das plattenförmige Befestigungsstück wird z.B. mit der Befestigungsplatte mittels Schrauben verschraubt. Die Befestigungsplatte dient optional als Verstärkung, um eine sichere Befestigung des Handgriffs zu gewährleisten. Die Schenkel der L-Form können gleich lang sein.

Gemäß einer Ausführungsform ist das Arretierungselement ein schraubenförmiges Element, das mit der Führung zusammenwirkt, um die Absturzsicherung in der Arbeitsstellung zu arretieren. Das schraubenförmige Element weist einen Schraubenkopf und einen Schaft auf. Der Schaft des schraubenförmigen Elements kann ein Gewinde aufweisen oder ohne Gewinde ausgebildet sein. Das Rastelement kann an der Führung ausgebildet sein.

Wird die Absturzsicherung durch Hochziehen in die Arbeitsstellung gebracht, kann die automatische Verriegelung durch eine Schnappverriegelung erfolgen, bei dem eine Rastnase in eine Aussparung eingreifen kann. Durch Ziehen an dem Handgriff kann der Eingriff zwischen Rastnase und Aussparung gelöst und die Absturzsicherung in die Transportstellung gebracht werden.

Ferner kann die Befestigungsanordnung eine Auflage aufweisen, die U-förmig ausgebildet ist, um die Knieleiste aufzunehmen, wenn sich die Absturzsicherung in der Transportstellung befindet.

Die erfindungsgemäße Absturzsicherung kann als Modul ausgebildet sein, und je nach Baumaschine können zwei oder mehr Absturzsicherungsmodule durch Schraubverbindung miteinander verbunden werden.

Jede der zuvor beschriebenen Ausführungsformen oder vorteilhaften Weiterbildungen gewährleisten einen schnellen Rüstvorgang und einen sicheren Auf- und Abbau der Absturzsicherung, während gleichzeitig die Anzahl der Komponenten reduziert und Kosten gespart werden können.

In einem weiteren Aspekt bezieht sich die Erfindung auf eine Baumaschine mit einer Absturzsicherung in irgendeiner der geschilderten Ausführungsformen. Die Baumaschine kann insbesondere ein Straßenfertiger oder ein Beschickerfahrzeug zum Beschicken eines Straßenfertigers sein.

### Kurze Beschreibung der Zeichnungen

Fig. 1 zeigt eine perspektivische Ansicht einer Absturzsicherung gemäß einer ersten Ausführungsform der vorliegenden Erfindung in einer Transportstellung;
Fig. 2 zeigt perspektivische Ansicht der Absturzsicherung gemäß der ersten Ausführungsform der vorliegenden Erfindung in einer Arbeitsstellung;
Fig. 3 zeigt eine Teilansicht von Fig. 2, die ein Arretierungselement an einer Befestigungsanordnung gemäß einer Ausführungsform darstellt, und zeigt einen Ausschnitt D entlang eines Querschnitts A-A, der ein Arretierungselement an einem der Pfosten gemäß einer weiteren Ausführungsform darstellt;
Fig. 4 zeigt eine vergrößerte Ansicht des Ausschnitts D von Fig. 3;
Fig. 5 zeigt eine perspektivische Ansicht einer Absturzsicherung gemäß einer zweiten Ausführungsform der vorliegenden Erfindung in einer Transportstellung;
Fig. 6 zeigt eine perspektivische Ansicht einer Absturzsicherung gemäß der zweiten Ausführungsform der vorliegenden Erfindung in einer Arbeitsstellung; und
Fig. 7 zeigt eine Detailansicht eines Verbindungsmechanismus und eines Arretierungselements gemäß der zweiten Ausführungsform der vorliegenden Erfindung.
Fig. 8 zeigt eine Baumaschine mit einer an einem Laufsteg montierten Absturzsicherung.

### Beschreibung der Ausführungsformen

Im Folgenden werden Ausführungsformen der vorliegenden Erfindung anhand der Figuren näher beschrieben. In der Beschreibung und den Zeichnungen sind gleiche oder entsprechende Komponenten mit den gleichen Bezugszeichen versehen, und ihre Beschreibung wird nicht wiederholt. In den Zeichnungen können einige Konfigurationen aus Gründen der einfacheren Beschreibung weggelassen oder vereinfacht dargestellt sein.

In den Ausführungsformen geben eine X-Achse, eine Y-Achse und eine Z-Achse eines kartesischen XYZ-Koordinatensystems jeweils eine Längsrichtung X, eine Breitenrichtung Y und eine Höhenrichtung Z an.

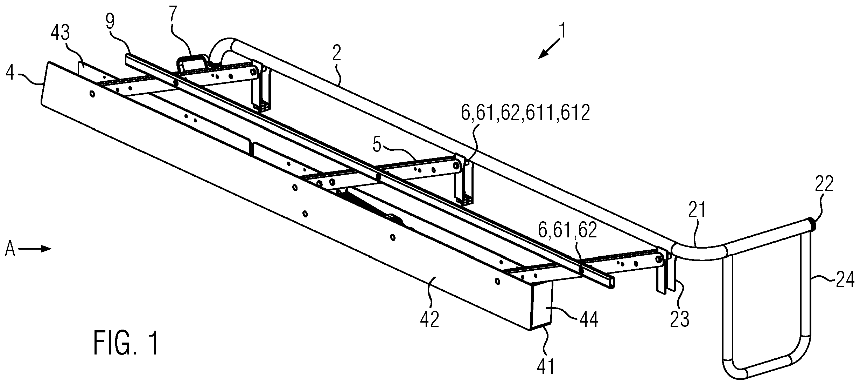

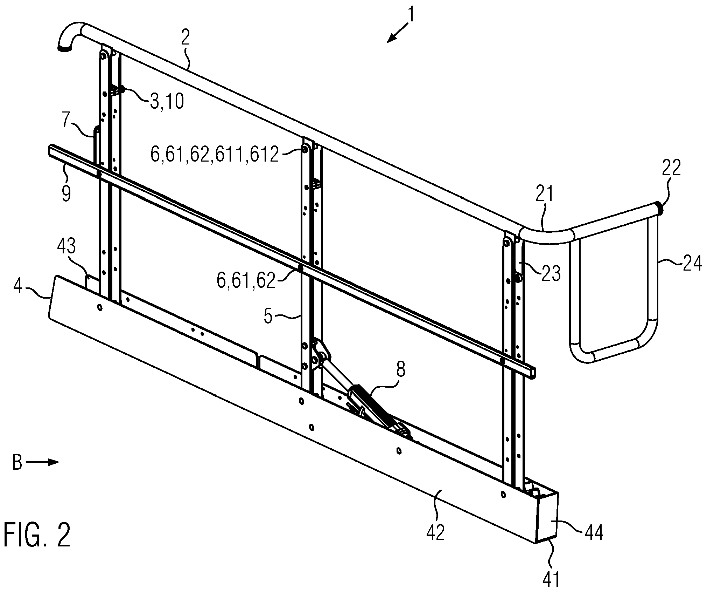

Fig. 1 zeigt eine perspektivische Ansicht einer Absturzsicherung 1 gemäß einer ersten Ausführungsform der vorliegenden Erfindung in einer Transportstellung A, und Fig. 2 zeigt perspektivische Ansicht der Absturzsicherung 1 gemäß der ersten Ausführungsform der vorliegenden Erfindung in einer Arbeitsstellung B. Die Absturzsicherung 1 ist als Geländer ausgebildet, das an einer Baumaschine angebracht wird, z.B. an einer Straßenbaumaschine wie einem Straßenfertiger oder einem Beschickerfahrzeug für einen Straßenfertiger. Die Absturzsicherung 1 wird entlang einer Erstreckungsrichtung, d.h. der Längsrichtung, z.B. eines Bedienstandes oder eines Laufstegs befestigt, der an einer oder mehr Seiten der Baumaschine vorgesehen ist, um es einem Bediener zu ermöglichen, Arbeiten bzw. Kontrollen an der Baumaschine vorzunehmen.

Die Absturzsicherung 1 umfasst einen Handlauf 2 und eine Befestigungsanordnung 4. Die Absturzsicherung 1 kann ferner eine Knieleiste 9 aufweisen.

Die Befestigungsanordnung 4 umfasst eine Bodenplatte 41, eine vordere Seitenwand 42, eine hintere Seitenwand 43 und zwei laterale Seitenwände 44, die die vordere Seitenwand 42 und die hintere Seitenwand 43 miteinander verbinden, um eine nach oben offene Kastenform zu bilden. An der vorderen Seitenwand 42 kann eine Aussparung 45 ausgebildet sein, die zur Aufnahme eines Linearaktuators 8 als Unterstützung zur manuellen Bewegung zwischen der Transportstellung A und der Arbeitsstellung B durch den Bediener. Wie zuvor beschrieben ist die vorliegende Erfindung nicht darauf beschränkt, und im Falle des Ausbildens der Aussparung 45 kann diese auch in der hinteren Seitenwand ausgebildet sein.

Der Handlauf 2 ist rohrförmig in einem kreisförmigen, quaderförmigen oder elliptischen Querschnitt ausgebildet. An den jeweiligen Endabschnitten 21 des Handlaufs 2 kann eine Endkappe 22 aufgesetzt sein. Wie in Fig. 1 und 2 gezeigt, ist in dem bestimmten Ausführungsbeispiel einer der Endabschnitte 21 länger ausgebildet, um die Befestigung eines Seitenschutzes 24 an diesem zu ermöglichen. Ferner sind am Handlauf 2 eine Vielzahl von Halteelementen 23 ausgebildet, die stabförmig ausgebildet sind und sich vom Handlauf 2 in der Z-Achsenrichtung nach unten erstrecken.

Eine Vielzahl von Pfosten 5 sind entlang der Längsrichtung der Absturzsicherung 1 in regelmäßigen Abständen angeordnet, um den Handlauf 2 und die Befestigungsanordnung 4, die parallel und beabstandet zueinander in der Höhenrichtung angeordnet sind, zu halten. In den Fig. 1 und 2 sind als Beispiel drei Pfosten 5 dargestellt. Je nach Abmessung der Absturzsicherung 1 können aber auch zwei oder mehr als drei Pfosten 5 vorgesehen sein. Jeder der Vielzahl von Pfosten 5 kann in der Form eines einzelnen Pfostens oder in der Form von zwei in Y-Achsenrichtung voneinander beabstandeten Pfosten, d.h. eines Doppelpfostens, ausgebildet sein. Sind die Vielzahl von Pfosten 5 als einzelne Pfosten ausgebildet, können diese, wie in Fig. 1 und 2 gezeigt, in der Form eines C gekanteten Blechs ausgebildet sein.

Ein in Fig. 1 und 2 dargestellter Verbindungsmechanismus 6 ist als Drehgelenk 61 an Anbindungspunkten 62 ausgeführt, das so betätigt wird, dass sich eine Parallelogrammführung ergibt. Der Anbindungspunkt 62 ist die Verbindungsstelle zwischen jedem der Pfosten 5 und dem Handlauf 2 und wischen jedem der Pfosten 5 und der Befestigungsanordnung 4. Das Gelenk 61 besteht aus einer Bohrung 611, die in jedem der Pfosten 5 ausgebildet ist, und einem Bolzen 612, der ein Verbindungsstück zwischen dem einzelnen Pfosten oder Doppelpfosten bildet. Der Bolzen 612 ist in der Bohrung 611 drehbar gelagert.

Die Absturzsicherung 1 umfasst ferner einen Handgriff 7, der seitlich an einem der Vielzahl von Pfosten 5 oder an der Innenseite davon angebracht ist, wie in Fig. 1 und 2 gezeigt. Der Bediener greift den Handgriff und bewegt die Absturzsicherung durch Ziehen in Richtung Arbeitsstellung und durch Drücken in Richtung Transportstellung.

In der Transportstellung A, wie in Fig. 1 gezeigt, liegt die Absturzsicherung 1 an einer der lateralen Seitenwände 44 auf und wird durch ihr Eigengewicht in dieser Stellung gehalten. In der Transportstellung A hat die Absturzsicherung 1 die Form eines Parallelogramms. In der Arbeitsstellung B, wie in Fig. 2 gezeigt, befindet sich die Absturzsicherung 1 in einer aufgerichteten Position und hat die Form eines Rechtecks. Das heißt, die Absturzsicherung 1 kann durch Auf- und Zusammenklappen der Vielzahl von Pfosten 5 in einer Ebene, die durch die X-Achsenrichtung und die Z-Achsenrichtung definiert wird, zwischen der Transportstellung A und der Arbeitsstellung B bewegt werden. Dadurch wird ein schneller Rüstvorgang und ein sicherer Auf- und Abbau der Absturzsicherung 1 gewährleistet. In der Arbeitsstellung B dienen in Fig. 2 gezeigten Halteelemente 23 dabei als Stabilisierungselemente und als Anschlag im Falle der C gekanteten Pfosten 5. Während der Bewegung zwischen der Transportstellung A und der Arbeitsstellung B dienen die Halteelemente 23 als Führungshilfen.

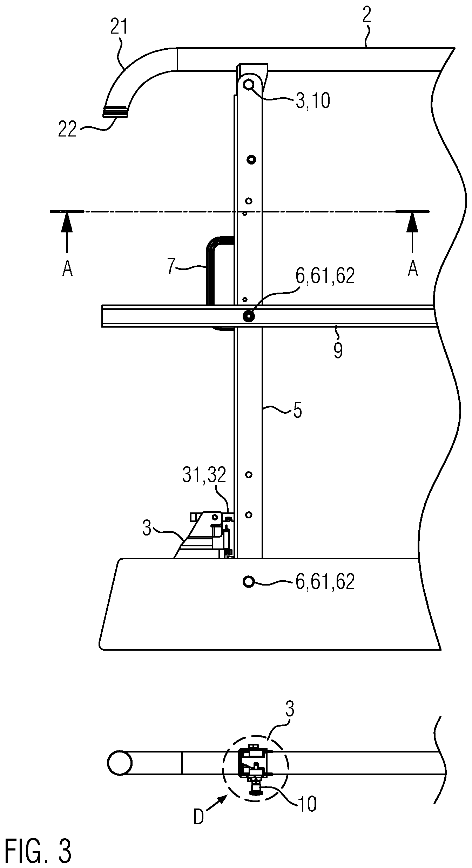

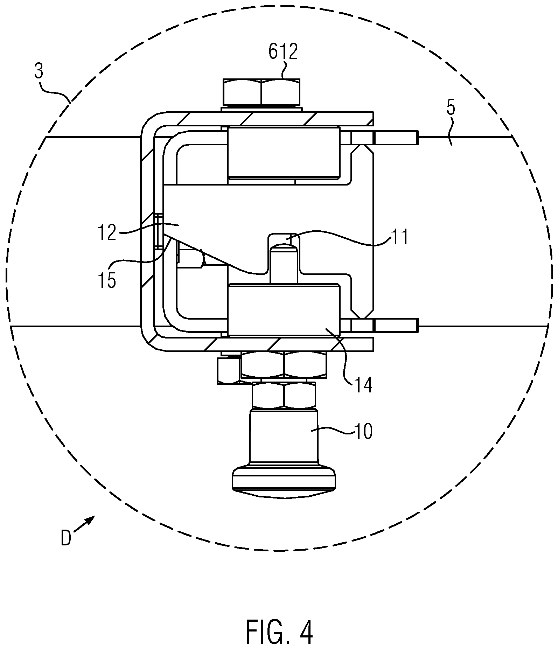

Um die Absturzsicherung 1 in der Arbeitsstellung B sicher zu arretieren, ist an der Absturzsicherung 1 ein Arretierungselement 3 vorgesehen. In dem in Fig. 3 gezeigten Beispiel ist das Arretierungselement 3 ein Rastelement in der Form einer Rastnase 31, die an der Befestigungsanordnung 4 ausgebildet ist, und ein Einrastelement 32, das in der Form eines stabförmigen Elements oder einer Aussparung an einem der Pfosten 5 vorgesehen ist, sodass die Rastnase 31 in das Einrastelement 32 eingreifen kann. Der durch das Arretierungselement 3 gebildete Einrastmechanismus kann mithilfe einer Rückstellfeder oder durch manuelles Arretieren erfolgen. Alternativ ist das Arretierungselement 3 ein Rastbolzen 10, wie in Ausschnitt D in Fig. 3 und Fig. 4 gezeigt,

Fig. 4 zeigt eine vergrößerte Ansicht des Ausschnitts D von Fig. 3, das ein Arretierungselement 3 gemäß einer Modifikation der ersten Ausführungsform der vorliegenden Erfindung darstellt. In diesem Fall wird das Arretierungselement 3 als Rastelelement durch einen Rastbolzen 10 und eine Aussparung 11 gebildet, die in einem Führungselement 12 ausgebildet ist und in die der Rastbolzen 10 eingreift. Um das Führen des Rastbolzens 10 in die Aussparung 11 zu erleichtern, weist das Führungselement 12 eine konische Führungsfläche 15 auf, entlang der der Rastbolzen 10 gleitet. Das Arretierungselement 3 ist mithilfe der Bolzen 612 an einem der Vielzahl von Pfosten 5 befestigt. In dem Rastbolzen 10 ist eine Rückstellfeder 14 ausgebildet, deren Rückstellkraft das Ein- und Ausrasten ermöglicht. Das Ein- und Ausrasten des Rastbolzens 10 erfolgt durch die manuelle Bewegung des Rastbolzens 10 durch den Bediener.

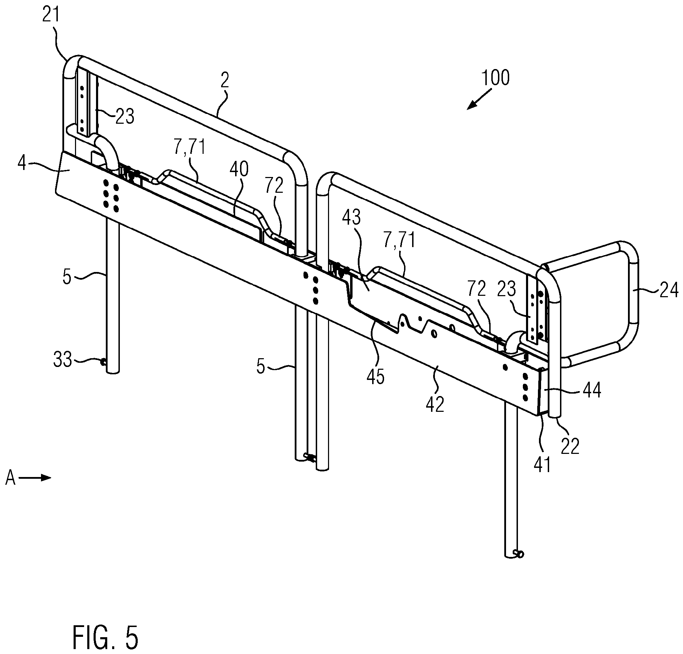

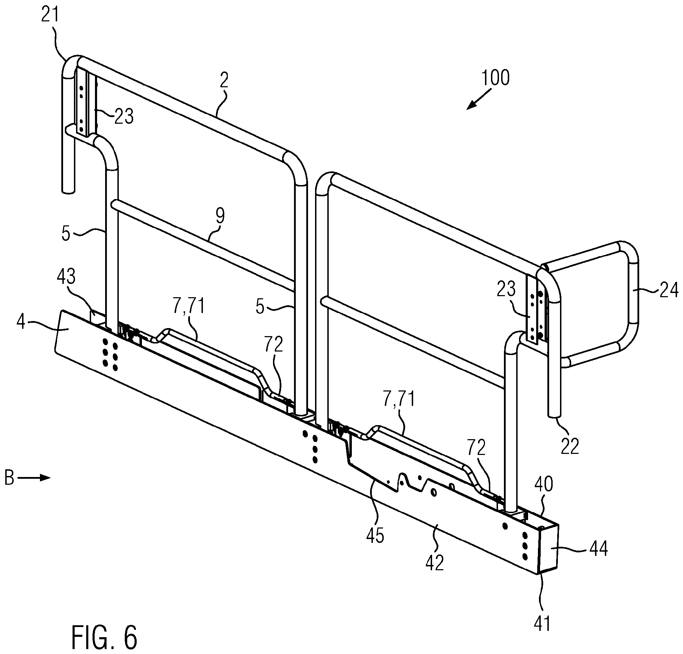

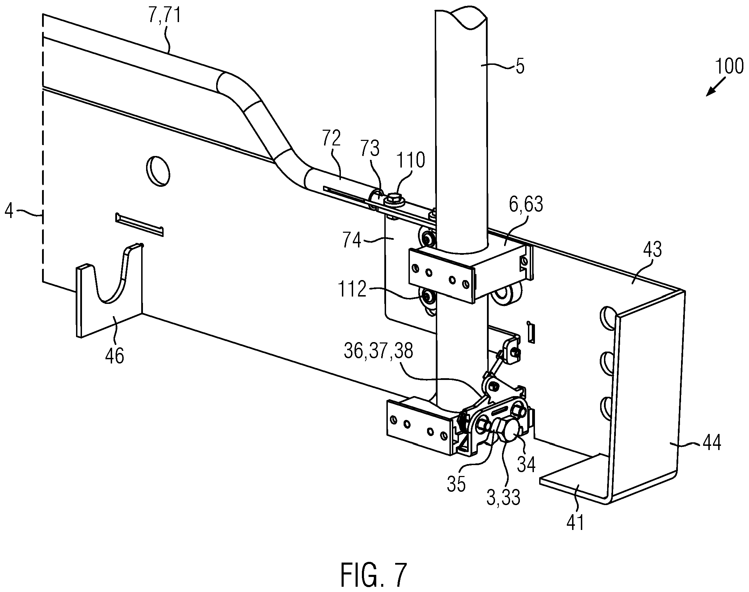

Fig. 5 zeigt eine perspektivische Ansicht einer Absturzsicherung 100 gemäß einer zweiten Ausführungsform der vorliegenden Erfindung in der Transportstellung A, und Fig. 6 zeigt eine perspektivische Ansicht einer Absturzsicherung gemäß der zweiten Ausführungsform der vorliegenden Erfindung in einer Arbeitsstellung. Fig. 7 zeigt eine Detailansicht eines Verbindungsmechanismus und eines Arretierungselements gemäß der zweiten Ausführungsform der vorliegenden Erfindung. In den Fig. 5 bis 7 sind die Komponenten, die jenen der ersten Ausführungsform entsprechen, mit den gleichen Bezugszeichen gekennzeichnet, und deren Beschreibung wird nicht wiederholt.

Die in Fig. 5 und 6 gezeigte Absturzsicherung 100 umfasst zwei Pfosten 5 mit rundem Querschnitt, die einstückig mit dem Handlauf 2 ausgebildet sind. Ferner ist eine Knieleiste 9 vorgesehen. Es können mehr als eine Absturzsicherung 100 vorgesehen sein, die über Befestigungsmittel (nicht dargestellt) miteinander verbunden werden können. Diese modulare Bauweise hat den Vorteil, dass die Absturzsicherung 100 in jeder Baumaschine eingesetzt werden kann, da deren Länge individuell einstellbar ist.

Die zweite Ausführungsform unterscheidet sich von der ersten Ausführungsform dahingehend, dass die Absturzsicherung 100 durch Vertikalführung zwischen der Transportstellung A und der Arbeitsstellung B bewegt wird. Dazu wird der Handlauf 2 vom Bediener gegriffen und hochgezogen und automatisch verriegelt, wodurch die Absturzsicherung 100 schnell und einfach von der Transportstellung A in die Arbeitsstellung B gebracht wird. Wird die Absturzsicherung 1 durch Hochziehen in die Arbeitsstellung B gebracht, erfolgt die automatische Verriegelung durch eine Schnappverriegelung 36, wie in Fig. 7 gezeigt, bei dem eine Rastnase 37 in eine Aussparung 38 eingreift.

Um die Arretierung zu lösen, zieht der Bediener mit seiner Hand oder seinem Fuß an dem Handgriff 7. Dadurch löst sich der Eingriff zwischen der Rastnase 37 und der Aussparung 38 der Schnappverriegelung 36.

Der Handgriff 7 ist in der Form einer trapezförmigen Stange 71 ausgebildet, deren Endabschnitte 72 derart nach außen gebogen sind, dass sie an einer Oberseite 40 der Befestigungsanordnung 4, wie in Fig. 5 bis 7 gezeigt, befestigbar sind. In dem Ausführungsbeispiel befindet sich der Handgriff 7 an der hinteren Seitenwand 43. An jedem Endabschnitt 72 ist ein plattenförmiges Befestigungsstück 73 vorgesehen, das mit dem Handgriff 7 verschweißt oder mittels Reibschluss verbunden ist. Das plattenförmige Befestigungsstück 73 weist zwei Durchgangslöcher auf. Eine Befestigungsplatte 74 ist an der Innenfläche der hinteren Seitenwand 43 befestigt. Die Befestigungsplatte 74 ist L-förmig ausgebildet und wird so an der hinteren Seitenwand 43 befestigt, dass sich der kurze Schenkel der L-Form auf Höhe der Oberseite 40 befindet und nach innen ragt (in Richtung der vorderen Seitenwand 42), um als Auflagefläche zu dienen. Der lange Schenkel der L-Form wird mittels Schrauben 112 an der Innenfläche der hinteren Seitenwand befestigt. Der kurze Schenkel der L-Form weist zwei Durchgangslöcher auf. In dem vorliegenden Ausführungsbeispiel sind jeweils zwei Durchgangslöcher ausgebildet. Das plattenförmige Befestigungsstück 73 wird mit der Befestigungsplatte 74 mittels Schrauben 110 verschraubt.

Der Verbindungsmechanismus 6 gemäß der zweiten Ausführungsform ist eine Führung 63, die in der Form von zwei zylinderförmigen Elementen mit quaderförmigen Querschnitt ausgebildet ist. Die Pfosten 5 werden derart in der Führung 63 geführt, dass diese mithilfe des Handlaufs 2 von der Transportstellung A, wie in Fig. 5 gezeigt, in die Arbeitsstellung B, wie in Fig. 6 gezeigt, bewegt werden kann. Dies erfolgt durch vertikales Hochziehen des Geländers am Handlauf 2. In der Arbeitsstellung B wird die Absturzsicherung 100 mithilfe des Arretierungselements 3 automatisch arretiert. In dem in vorliegenden Beispiel dient die Knieleiste 9 als Anschlag zur Begrenzung der Bewegung von der Arbeitsstellung B in die Transportstellung A. Auf der Innenfläche der Bodenplatte 41 der Befestigungsanordnung 4 ist eine Auflage 46 ausgebildet, die U-förmig ausgebildet ist, um die Knieleiste 9 aufzunehmen. Die Form der Auflage 46 entspricht der Querschnittsform der Knieleiste 9. Die Absturzsicherung 100 wird von der Arbeitsstellung B in die Transportstellung A gebracht, indem der Bediener das Geländer greift, es mittels Handgriff 7 entriegelt und es dann nach unten ablässt.

Das Arretierungselement 3 gemäß der zweiten Ausführungsform ist ein schraubenförmiges Element 33, das mit der Führung 63 zusammenwirkt, um die Absturzsicherung 100 in der Arbeitsstellung B, wie in Fig. 7 gezeigt, zu arretieren. Das schraubenförmige Element 33 weist einen Schraubenkopf 34 und einen Schaft 35 auf.

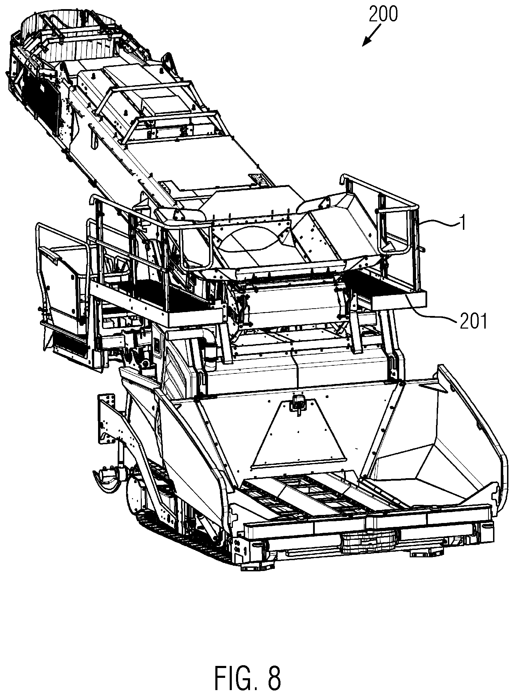

Fig. 8 zeigt eine Baumaschine 200, insbesondere ein Beschickerfahrzeug, das hier optional durch Anbau einer Einbaubohle an die Flansche der Zugholme als Straßenfertiger verwendbar ist, mit einem Laufsteg 201 und der Absturzsicherung 1. Es versteht sich von selbst, dass die Baumaschine 200 auch die Absturzsicherung 100 gemäß der zweiten Ausführungsform aufweisen kann. Die Absturzsicherung 1, 100 kann zusätzlich zu oder anstelle einer Befestigung an dem Laufsteg 201 auch an einem Bedienstand befestigt werden.

Es sollte verstanden werden, dass die hier offenbarte Ausführungsform in jeder Hinsicht der Veranschaulichung dient und nicht einschränkend ist. Der Umfang der vorliegenden Erfindung wird durch die Begriffe der Ansprüche und nicht durch die obige Beschreibung definiert und soll alle Änderungen innerhalb des Umfangs und der Bedeutung umfassen, die den Begriffen der Ansprüche entsprechen.

### Bezugszeichenliste

- 1,100: Absturzsicherung (Geländer)
- 2: Handlauf
- 10: Rastbolzen
- 11: Aussparung
- 12: Führungselement
- 14: Rückstellfeder
- 15: konische Führungsfläche
- 21: Endabschnitt
- 22: Endkappe
- 23: Halteelemente
- 24: Seitenschutz
- 3: Arretierungselement
- 31: Rastelement
- 32: Gegenstück (Einrastelement)
- 33: Schraubenförmiges Element
- 34: Schraubenkopf
- 35: Schaft
- 36: Rastelement
- 37: Rastnase
- 38: Aussparung
- 4: Befestigungsanordnung
- 40: Oberseite
- 41: Bodenplatte
- 42: Vordere Seitenwand
- 43: Hintere Seitenwand
- 44: Laterale Seitenwand
- 45: Aussparung
- 46: Auflage
- 5: Pfosten
- 6: Verbindungsmechanismus
- 61: Drehgelenk
- 611: Bohrung
- 612: Bolzen
- 62: Anbindungspunkt
- 63: Führung
- 7: Handgriff
- 71: Trapezförmige Stange
- 72: Endabschnitt
- 73: Plattenförmiges Befestigungsstück
- 74: L-förmige Befestigungsplatte
- 8: Linearaktuator
- 9: Knieleiste
- 110: Schraube
- 112: Schraube
- 200: Baumaschine
- 201: Laufsteg
- A: Transportstellung
- B: Arbeitsstellung

## Patentansprüche

1. Absturzsicherung (1, 100) für eine Baumaschine (200), die Absturzsicherung (1, 100) umfassend:
einen Handlauf (2);
eine Befestigungsanordnung (4); und
eine Vielzahl von Pfosten (5), die in Abständen zueinander entlang einer X-Achse eines kartesischen XYZ-Koordinatensystems der Absturzsicherung (1) angeordnet und ausgebildet sind, um den Handlauf (2) und die Befestigungsanordnung (4), die parallel und beabstandet zueinander entlang einer Z-Achse des kartesischen XYZ-Koordinatensystems angeordnet sind, abzustützen;
**dadurch gekennzeichnet, dass**
ein Verbindungsmechanismus (6) zum Verbinden der Vielzahl von Pfosten (5) mit dem Handlauf (2) und der Befestigungsanordnung (4) derart ausgebildet ist, dass die Absturzsicherung (1) in einer durch die X-Achse und die Z-Achse gebildete Ebene (XZ) zwischen einer Transportstellung (A) und einer Arbeitsstellung (B) bewegbar ist.

2. Absturzsicherung für eine Baumaschine gemäß Anspruch 1, ferner umfassend:
einen Handgriff (7) zur manuellen Bewegung der Absturzsicherung (1) zwischen der Transportstellung (A) und der Arbeitsstellung (B).

3. Absturzsicherung für eine Baumaschine gemäß einem der vorangehenden Ansprüche, wobei die Arbeitsstellung (B) durch ein Arretierungselement (3) einstellbar ist.

4. Absturzsicherung für eine Baumaschine gemäß Anspruch 3, wobei das Arretierungselement (3) an der Befestigungsanordnung (4) oder an einem der Pfosten (5) ausgebildet ist.

5. Absturzsicherung für eine Baumaschine gemäß einem der vorangehenden Ansprüche, ferner umfassend:
einen Linearaktuator (8) zur Unterstützung der Bewegung zwischen der Transportstellung (A) und der Arbeitsstellung (B).

6. Absturzsicherung für eine Baumaschine gemäß Anspruch 5, wobei der Linearaktuator (8) an der Befestigungsanordnung (4) ausgebildet ist.

7. Absturzsicherung für eine Baumaschine gemäß Anspruch 5 oder 6, wobei der Linearaktuator (8) in einer Aussparung (45), die in oder an der Befestigungsanordnung (4) ausgebildet ist, untergebracht ist.

8. Absturzsicherung für eine Baumaschine gemäß einem der der vorangehenden Ansprüche, wobei der Verbindungsmechanismus (6) ein Drehgelenk (61) an Anbindungspunkten (62) der Vielzahl von Pfosten (5) ist, sodass die Bewegung zwischen der Transportstellung (A) und der Arbeitsstellung (B) eine Parallelogrammführung ist.

9. Absturzsicherung für eine Baumaschine gemäß einem der Ansprüche 2 bis 9, wobei der Handgriff (7) an einem der Vielzahl von Pfosten (5) ausgebildet ist.

10. Absturzsicherung für eine Baumaschine gemäß einem der Ansprüche 3 bis 10, wobei das Arretierungselement (3) ein Rastelement (10, 31) und ein an einem der Vielzahl von Pfosten (5) ausgebildetes Gegenstück (11, 32) umfasst, die in Eingriff bringbar sind.

11. Absturzsicherung für eine Baumaschine gemäß einem der vorangehenden Ansprüche, wobei die Absturzsicherung (1) durch ihr Eigengewicht in der Transportstellung (A) gelagert ist.

12. Absturzsicherung für eine Baumaschine gemäß einem der vorangehenden Ansprüche, wobei der Verbindungsmechanismus (6) eine Führung (63) ist, die an der Befestigungsanordnung (4) derart ausgebildet ist, dass die Bewegung zwischen der Transportstellung (A) und der Arbeitsstellung (B) eine Vertikalführung ist.

13. Absturzsicherung für eine Baumaschine gemäß einem der Ansprüche 2 bis 12, wobei der Handgriff (7) an der Befestigungsanordnung (4) ausgebildet ist.

14. Absturzsicherung für eine Baumaschine gemäß einem der Ansprüche 2 bis 13, wobei das Arretierungselement (3) eine Schnappverriegelung (36) ist, das mit der Führung (63) zusammenwirkt, um die Absturzsicherung (1) in der Arbeitsstellung zu arretieren.

15. Baumaschine (200) mit einer Absturzsicherung (1, 100) gemäß einem der der vorangehenden Ansprüche.
